# EUROPÄISCHE PATENTANMELDUNG

(11) **EP 1 431 159 A2**
(43) Veröffentlichungstag der Anmeldung: **23.06.2004**
(21) Anmeldenummer: 03025583.0
(22) Anmeldetag: 08.11.2003
(51) Int. Cl.: B62D 1/19, B60R 21/16

(54) **Sicherheits-Lenkungsanordnung**

(30) Priorität: 20.12.2002 DE 10261178
(71) Anmelder: DaimlerChrysler AG, 70567 Stuttgart (DE)
(72) Erfinder: Fischer, Herbert, 71263 Weil der Stadt (DE); Traub, Hansjörg, 70565 Stuttgart (DE)

(57) **Zusammenfassung**

Es wird eine Lenkungsanordnung (9) mit einem Lenkrad (13) sowie Mitteln zum Übertragen einer Drehbewegung des Lenkrads (13) auf Fahrzeugräder vorgeschlagen. Im Fall eines Aufpralles verschwenkt das Lenkrad (13) von einer Gebrauchsposition in eine dem gegenüber steilere Sicherheitsposition. Durch die erfindungsgemäße Lenkungsanordnung (9) soll die Sicherheit von Fahrzeuginsassen erhöht werden. Dazu wird unterhalb des Lenkrades (13) ein Gassack (19) angeordnet, der im Falle des Aufpralls ausgelöst wird und sich zwischen dem sich in der Sicherheitsposition befindlichen Lenkrad (13) und einem Fahrzeuginsassen entfaltet.

## Beschreibung

Die Erfindung betrifft eine Lenkungsanordnung gemäß dem Oberbegriff des Patentanspruchs 1.

Bei Fahrzeugen mit einem kurzen bzw. keinem Vorderwagen, also beispielsweise bei Bussen oder Lastkraftwagen, besteht die Gefahr, dass vor dem Fahrer befindliche Aggregate, beispielsweise Lenksäulenanordnungen, bei einem Aufprall in Richtung auf den Fahrer verlagert werden. Um diese Gefahr zu reduzieren, ist es beispielsweise aus der DE 26 36 266 A1 bekannt, eine Lenksäule für eine Lenksäulenanordnung zweiteilig auszuführen, wobei ein erster unterer Teil der Lenksäule mit einem Lenkgetriebe und ein zweiter oberer Teil der Lenksäule mit dem Lenkrad verbunden ist. Bei der bekannten Lenksäulenanordnung sind die beiden Lenksäulenteile über ein Gelenk miteinander verbunden, welches ein Verschwenken des oberen Lenksäulenteils mit dem Lenkrad relativ zu dem unteren Lenksäulenteil ermöglicht. Dadurch wird es möglich, im Falle eines Aufpralls, das Lenkrad weg vom Fahrer in Richtung Fahrzeugfront zu verschwenken. Der lenkradseitige obere Lenksäulenteil wird dabei steiler gestellt, wodurch das Lenkrad bzw. der Lenkradkranz eine horizontalere Stellung einnimmt. Damit durch diese Horizontalstellung des Lenkradkranzes keine Gefährdung des Fahrers eintritt, schlägt die oben genannte Offenlegungsschrift vor, das Lenkrad mit dem oberen Lenksäulenteil so auszubilden, dass beim Aufprall des Fahrers - also nach der Steilerstellung des lenkradseitigen oberen Säulenteils - ein Kippen des Lenkradkranzes auf den Fahrzeuginsassen zu erfolgt, sodass dem Insassen eine großflächige Aufprallzone geboten wird. Die bekannte Anordnung bringt den Nachteil mit sich, dass zwischen Lenkrad und Lenksäule ein Kippelement vorgesehen sein muss. Dieses bringt zusätzlichen Herstellungs- und Montageaufwand und somit erhöhte Kosten mit sich, die sich insbesondere in der Serienfertigung negativ auswirken.

Weiterhin ist es aus der DE 197 36 136 A1 bekannt, ein im Falle eines Aufpralls aufstellbares Lenkrad mit einem Gassack zu versehen. Der Gassack der bekannten Lenkungsanordnung entfaltet sich im Falle eines Aufpralls oberhalb einer durch einen Lenkradkranz gebildeten Ebene und erstreckt sich somit zwischen dieser Ebene und einem Fahrzeuginsassen. Während eines Kollisionsvorganges wird zunächst der Airbag ausgelöst und dadurch in die soeben beschriebene Position gebracht, in der er den Fahrzeuginsassen abfängt. Anschließend erfolgt ein Verschwenken des Lenkrades aus der normalen Funktionsposition heraus, weg vom Fahrzeuginsassen.

Der vorliegenden Erfindung liegt die Aufgabe zugrunde, eine Lenkungsanordnung für Fahrzeuge mit einem kurzen Vorderwagen zu schaffen, durch die die Sicherheit von Fahrzeuginsassen erhöht wird.

Diese Aufgabe wird erfindungsgemäß durch eine Lenkungsordnung mit den Merkmalen des Patentanspruchs 1 gelöst.

Demnach zeichnet sich die erfindungsgemäße Lenkungsanordnung im wesentlichen durch zwei Merkmale aus. Zum einen wird durch die beanspruchte Merkmalskombination ein Verschwenken des Lenkrads vom Insassen weg ermöglicht. Zum anderen ist ein Airbag vorgesehen, der als Aufprallschutz dient und sich dazu zwischen dem verschwenkten Lenkrad und einem Fahrzeuginsassen entfaltet. Dazu ist der Gassack unterhalb des Lenkrades so angeordnet und in seiner Form so ausgestaltet, dass er eine ausreichend große Auffangfläche zur Verfügung stellt, wenn er sich von der verschwenkten Position des Lenkrads aus in Richtung Fahrzeuginsassen entfaltet. Das Verschwenken des Lenkrads und das Entfalten des Gassacks sind zeitlich aufeinander abgestimmt, sodass im Falle eines Unfalls das Aufstellen des Lenkrads sowie das Entfalten des Gassacks zu dem Zeitpunkt abgeschlossen sind, zu dem ein Fahrzeuginsasse eine nach vorne gerichtete Bewegung durchführt.

Eine Drehbewegung des Lenkrads kann auf verschiedene Arten auf Fahrzeugräder übertragen werden. Bei herkömmlichen Lenkungsanordnungen erfolgt die Übertragung mittels einer Lenksäule. Um die Erfindung umzusetzen, kann eine solche Lenksäule zweiteilig ausgeführt sein, wobei ein unterer Teil mit einem Lenkgetriebe verbunden ist und ein oberer Teil mit einem Lenkrad. Die beiden Teile können über ein Gelenk miteinander verbunden sein. Ein Verschwenken des Lenkrads in eine Sicherheitsposition kann durch Verschwenken des oberen Teils der Lenksäule relativ zu dem unteren Teil erfolgen. Bei sogenannten steer-by-wire Anordnungen, bei denen die Übertragung der Drehbewegung des Lenkrads mittels elektronischer Hilfsmittel erfolgt und keine das Lenkrad mit einem Getriebe verbindende Lenksäule vorgesehen ist, kann ebenfalls ein Aufstellen des Lenkrads erfolgen. In diesem Fall kann das Lenkrad an einem oberen Lernsäulenteil bzw. Lenkradaufnahmeteil gelagert sein.

Gemäß einer Ausführungsform ist der Gassack in einem unterhalb des Lenkrades angeordneten Verkleidungsmodul verstaut. Die Verkleidung bietet eine optisch gefällige Möglichkeit, ein Gassackmodul zu verdecken. Darüber hinaus kann das Gassackmodul in dem Verkleidungsmodul vormontiert und anschließend gemeinsam mit diesem endmontiert werden, wodurch sich die Montage des Gassacks erheblich vereinfacht.

Gemäß einer weiteren Ausführungsform entfaltet sich der Gassack im Falle eines Aufpralls zunächst unterhalb und im wesentlichen parallel zu der durch das Lenkrad gebildeten Ebene. Da das Entfalten des Gassacks nur in Kombination mit einem Verschwenken des Lenkrads erfolgt, entfaltet sich der Gassack zunächst in einer im wesentlichen horizontalen Ebene. Der Gassack ist bevorzugt so angeordnet, dass die Entfaltungsrichtung auf einen Fahrzeuginsassen zu ausgerichtet ist.

Gemäß einer weiteren Ausführungsform weist der Gassack zwei verschiedene Bereiche auf. Ein erster Gassackbereich, der sogenannt Fußteil, schließt sich direkt an ein in dem Verkleidungsmodul angeordnetes Gassackmodul an. Er mündet in einem Haupt- bzw. Auffangteil des Gassacks. Der Fußteil dient dazu, eine Verbindung zwischen dem Gassackmodul und dem Auffangteil herzustellen, durch die das in dem Gassackmodul erzeugte Gas in den Auffangteil strömt. Der Auffangteil hingegen dient dazu, einen Fahrzeuginsassen aufzufangen. Aus diesen Funktionen ergibt sich ein mögliches Querschnittsverhältnis zwischen den beiden Gassackteilen, bei dem der Fußteil einen kleinere Querschnitt als der Auffangteil aufweist.

In entfaltetem Zustand kann sich der Gassack teilweise unterhalb des Lenkrades und teilweise zwischen dem aufgestellten Lenkrad und einem Fahrzeuginsassen befinden, wobei der Fußteil unterhalb des Lenkrades und der Auffangteil zwischen Lenkrad und Insassen angeordnet ist.

Zum Verschwenken des Lenkrads kann ein Aktivierungselement vorgesehen sei, welches im Falle eines Unfalls eine Kraft aufbringt, durch die das Verschwenken erfolgt. Selbstverständlich ist es auch denkbar, das Verschwenken, wie im Stand der Technik beschrieben, durch ein gezieltes Einleiten der Aufprallkraft zu initiieren. Die Verwendung eines Aktivierungselements bringt den Vorteil mit sich, dass das Verstellen gezielt und in vorbestimmten Bahnen erfolgt. Dadurch kann die Sicherheitsposition zuverlässig vorherbestimmt werden.

Als Aktivierungselement kann beispielsweise ein Druckluftzylinder verwendet werden. Derartige Druckluftzylinder werden derzeit bei Lenksäulenanordnungen für Fahrzeuge mit kurzem Vorderwagen eingesetzt, um eine Komfortverstellung der Lenksäule auf individuelle Bedürfnisse eines Fahrzeuginsassen zu ermöglichen. Die Verwendung von bereits verbauten Komponenten bringt den Vorteil mit sich, dass keine zusätzlichen Komponenten integriert werden müssen, was sich positiv auf die Herstellungskosten auswirkt. Selbstverständlich ist es auch denkbar, andere, aus dem Stand der Technik bekannte, Aktivierungselemente vorzusehen, wie beispielsweise einen Elektromotor oder eine vorgespannte Feder.

Die Auslösung des Aktivierungselementes kann mit Hilfe einer herkömmlichen Sensorik erfolgen. Denkbar sind sowohl die für die Auslösung von Gassäcken bekannten Kontaktsensoren als auch als Pre-Crash-Sensoren bezeichneten Systeme, die einen bevorstehenden Unfall detektieren und sich Fahrzeug sowie Umfelddaten zunutze machen.

Das Aktivierungselement kann entweder direkt an dem oberen Teil der Lenksäule angreifen oder aber auch an einem Verbindungselement. Die Verwendung eines Verbindungselementes bringt den Vorteil mit sich, dass das Aktivierungselement - je nach geometrischer Gestaltung des Verbindungselementes - in einem bezüglich des Bauraums günstigen Bereichs des Fahrzeugs angeordnet werden kann. Zudem kann man sich bei der Verwendung des Verbindungselementes die auf das Kräfteverhältnis günstig auswirkenden Hebelgesetze zu Hilfe nehmen.

Ein solches Verbindungselement kann beispielsweise ein Lenksäulenjoch sein, in dem die Lenksäule zumindest teilweise gelagert ist. Um eine Schwenkbewegung des Lenkrads zu ermöglichen, kann das Lenksäulenjoch drehbar gelagert sein.

Im folgenden wird die Erfindung anhand von dem in der Zeichnung dargestellten Ausführungsbeispiel näher erläutert.

In der Zeichnung ist schematisch ein Längsschnitt durch ein Fahrerhaus eines Lastkraftwagens dargestellt. Die Fahrzeugfront wird gebildet durch eine hinter einer Verkleidung 1 angeordnete Stirnwand 2. Verkleidung 1 und Stirnwand 2 sind in ihrem oberen Bereich über einen Querträger 3 miteinander verbunden. Oberhalb des Querträgers 3 schließt sich eine Windschutzscheibe 4 an. Die Stirnwand 2 mündet unten in einen weiteren Querträger 5. Weiterhin ist schematisch ein Boden 6 des Fahrerhauses angedeutet. Hinter der Windschutzscheibe 4 ist eine Instrumententafel 7 vorgesehen. Ein nicht dargestellter Fahrzeuginsasse kann auf einem teilweise dargestellten Fahrzeugsitz 8 Platz nehmen.

Zwischen Instrumententafel 7 und Sitz 8 ist eine Lenksäulenanordnung 9 vorgesehen, die im folgenden näher beschrieben wird. Die Lenksäulenanordnung 9 weist eine Lenksäule auf, die aus einem unteren Lenksäulenteil 11 und einem oberen Lenksäulenteil 12 besteht. Der untere Lenksäulenteil 11 ist mit einem nicht dargestellten Lenkgetriebe verbunden. Der obere Lenksäulenteil 12 wirkt mit einem Lenkrad 13 zusammen. Unterer Lenksäulenteil 11 und oberer Lenksäulenteil 12 sind über ein Gelenk 14 schwenkbar miteinander verbunden. Das Gelenk 14 ermöglicht ein Verschwenken des oberen Lenksäulenteils 12 gegenüber dem feststehenden unteren Lenksäulenteil 11. Der obere Lenksäulenteil 12 ist in einem Joch 15 gelagert. Das Joch 15 ist schwenkbar gelagert. Die Schwenkachse des Jochs 15 verläuft durch das Gelenk 14.

Um die Verschwenkbewegung in den oberen Teil 12 der Lenksäule 9 einleiten zu können, ist ein Druckluftzylinder 16 vorgesehen. Dieser ist mit seinem einen Ende 16' mit der Stirnwand 2 und mit seinem anderen Ende an einem Anknüpfungspunkt 16'' mit dem Joch 15 verbunden.

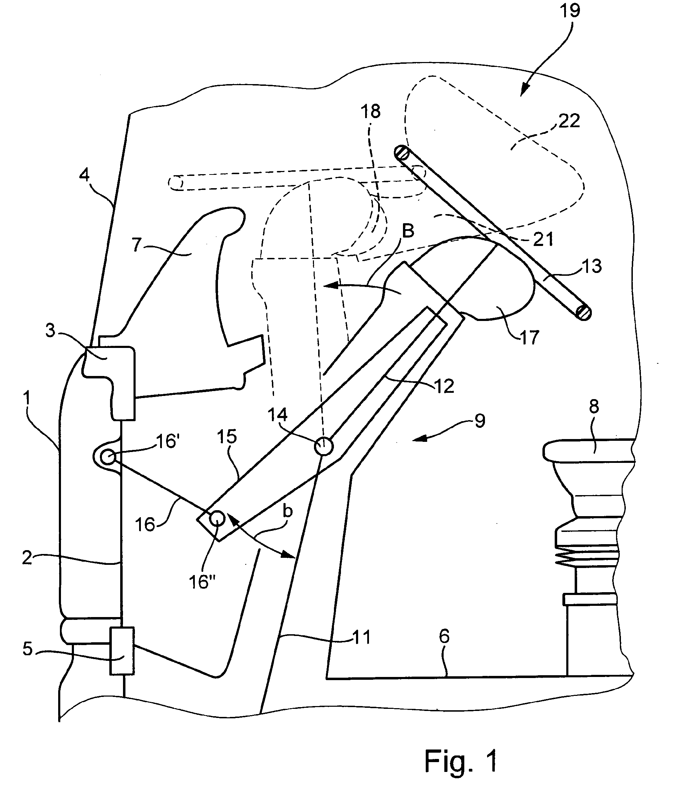

Im Falle eines Unfalls oder eines möglichen Unfalls wird von einem Sensorsystem ein Signal an den Druckluftzylinder 16 gegeben, worauf der Druckzylinder 16 ausgefahren wird und der Anknüpfungspunkt 16'' den Verschwenkradius b beschreibt. Beim Ausfahren nimmt der Druckluftzylinder 16 das Joch 15 über den Anknüpfungspunkt 16'' mit. Da der obere Teil 12 der Lenksäule 9 in dem Joch 15 gelagert ist, bewirkt ein Verschwenken des Jochs 15 ein Verschwenken des oberen Teils 12 der Lenksäule 9 in Richtung des Pfeils B. Mit dem oberen Teil 12 der Lenksäule 9 wird auch das Lenkrad 13 verschoben. Die aufrechte Sicherheitsposition des oberen Teil 12 der Lenksäule 9 ist in Figur 1 durch gestrichelte Linien dargestellt. Die Lenkungsanordnung ist so konzipiert, dass ein Lenken auch in der verschwenkten Position möglich ist. Zeitversetzt zu dem Signal, welches das Sensorsystem an den Druckluftzylinder 16 gibt, wird das in einem Verkleidungsmodul 17 angeordnete Gassackmodul 18 angesteuert. Dadurch wird ein Entfalten des Gassacks 19 initiiert, sodass der Gassack 19 in dem Moment vollständig entfaltet ist, in dem der obere Teil 12 der Lenksäule 9 mit dem Lenkrad 13 die Sicherheitsposition eingenommen und ein Fahrzeuginsasse seine Bewegung nach vorne begonnen hat.

Wie in der Zeichnung dargestellt, weist der Gassack 19 zwei unterschiedliche Bereiche auf. Zum einen ein Fußteil 21, welcher einen relativ kleinen Querschnitt aufweist und sich direkt an das Gassackmodul 18 anschließt. Weiterhin ist ein sich an den Fußteil 21 anschließender Auffangteil 22 vorgesehen, dessen Querschnitt größer ist als der des Fußteils 21. Der Fußteil 21 dient dazu, eine Verbindung zwischen dem Gassackmodul 18 und dem Auffangteil 22 herzustellen, sodass das in dem Gassackmodul 18 erzeugte Gas in den Auffangteil 22 geleitet wird. Der Auffangteil 22 dient dazu, eine großflächige Auffangeinheit für den sich nach vorne bewegenden Fahrzeuginsassen zu Verfügung zu stellen. Erfindungsgemäß erstreckt sich der Gassack 19 im wesentlichen unterhalb des aufrecht gestellten Lenkrades 13 sowie zwischen diesem und dem Fahrzeuginsassen. Es stellt somit einen wirkungsvollen Aufprallschutz für einen Fahrzeuginsassen dar und verhindert, eine Verletzung an dem aufrecht gestellten Lenkrad 13.

## Patentansprüche

1. Lenkungsanordnung mit
- einem Lenkrad sowie
- Mitteln zum Übertragen einer Drehbewegung des Lenkrads auf Fahrzeugräder, wobei
- im Falle eines Aufpralls das Lenkrad von einer Gebrauchsposition in eine demgegenüber steilere Sicherheitsposition verschwenkt wird,
**dadurch gekennzeichnet,**
**dass** unterhalb des Lenkrades (13) ein Gassack (19) angeordnet ist, der im Falle eines Aufpralls ausgelöst wird und sich zwischen dem sich in der Sicherheitsposition befindlichen Lenkrad und einem Fahrzeuginsassen entfaltet.

2. Lenkungsanordnung nach Anspruch 1
**dadurch gekennzeichnet**,
die Mittel zum Übertragen einer Drehbewegung des Lenkrads (13) aus einer zweigeteilten Lenksäule (9) bestehen, die einen unteren Teil (11), der mit einem Lenkgetriebe verbunden ist, sowie einem oberen Teil (12), der mit dem Lenkrad verbunden ist, umfasst.

3. Lenkungsanordnung nach Anspruch 1 oder 2
**dadurch gekennzeichnet,**
**dass** der Gassack (19) in ein Verkleidungsmodul (17) integriert ist, welches unterhalb des Lenkrads (13) angeordnet ist.

4. Lenkungsanordnung nach einem der Ansprüche 1 bis 3,
**dadurch gekennzeichnet,**
**dass** das Entfalten des Gassacks (19) zunächst unterhalb und im wesentlichen parallel zu einer Ebene erfolgt, in der sich das Lenkrad (13) erstreckt.

5. Lenkungsanordnung nach einem der Ansprüche 1 bis 4,
**dadurch gekennzeichnet,**
**dass** der Gassack (19) einen Auffangteil (22) sowie einen Fußteil (21) aufweist, wobei der Fußteil einen kleineren Querschnitt aufweist als der Auffangteil.

6. Lenkungsanordnung nach Anspruch 5,
**dadurch gekennzeichnet,**
**dass** sich in entfaltetem Zustand der Fußteil (21) unterhalb des Lenkrads (13) und der Auffangteil (22) zwischen Lenkrad und Fahrzeuginsassen befindet.

7. Lenkungsanordnung nach Anspruch 2,
**dadurch gekennzeichnet,**
**dass** der Lenksäulenanordnung (9) ein Aktivierungselement zugeordnet ist, mit dessen Hilfe das Verschwenken des Lenkrads (13) erfolgt.

8. Lenkungsanordnung nach Anspruch 7,
**dadurch gekennzeichnet,**
**dass** es sich bei dem Aktivierungselement um einen Druckluftzylinder (16) handelt.

9. Lenkungsanordnung nach Anspruch 7,
**dadurch gekennzeichnet,**
**dass** die Auslösung des Aktivierungselementes an eine Sensorik gekoppelt ist.

10. Lenkungsanordnung nach Anspruch 8,
**dadurch gekennzeichnet,**
**dass** der Druckluftzylinder (16) an einem Lenksäulenjoch (15) angreift, in dem der obere Teil (12) der Lenksäule (9) gelagert ist.
